# EUROPÄISCHE PATENTANMELDUNG

(11) **EP 4 497 872 A1**
(43) Veröffentlichungstag der Anmeldung: **29.01.2025**
(21) Anmeldenummer: 24190669.2
(22) Anmeldetag: 24.07.2024
(51) Int. Cl.: E01F 8/00, C04B 18/28

(54) **SCHALLABSORBER**

(30) Priorität: 27.07.2023 AT 506062023
(71) Anmelder: Kirchdorfer Fertigteilholding GmbH, 2752 Wöllersdorf (AT)
(72) Erfinder: LANZ, Gerald, 2752 Wöllersdorf (AT); PARBITZ, Jason, 2752 Wöllersdorf (AT); LEITHOLD, Roman, 2752 Wöllersdorf (AT); ARTNER, Ernst, 2752 Wöllersdorf (AT)
(74) Vertreter: Gibler & Poth Patentanwälte KG

(57) **Zusammenfassung**

Bei einem Schallabsorber (1) umfassend ein mit Bindemittel gebundenes Holzhackgut, wobei das Holzhackgut in einem ungebundenen Zustand wenigstens 50 Gew.-Prozent erste Holzstücke (2) umfasst, wobei jedes erste Holzstück (2) eine maximale Längserstreckung (3) im Raum aufweist, welche maximale Längserstreckung entlang einer Längsachse (4) verläuft, wobei die maximale Längserstreckung (3) des jeweiligen ersten Holzstücks (2) mindestens 1 Millimeter ist, wobei jedes erste Holzstück (2) eine maximale erste Quererstreckung (5) entlang einer zu der jeweiligen Längsachse (4) orthogonalen ersten Querachse (6) aufweist, wobei jedes erste Holzstück (2) eine maximale zweite Quererstreckung (7) entlang einer zweiten Querachse (8) aufweist, welche zweite Querachse (8) orthogonal zu der jeweiligen Längsachse (4) und orthogonal zu der jeweiligen ersten Querachse (6) ist, wird vorgeschlagen, dass die erste Quererstreckung (5) und die zweite Quererstreckung (7) des jeweiligen ersten Holzstücks (2) jeweils mindestens 30 Prozent von der Längserstreckung (3) des jeweiligen ersten Holzstücks (2) sind

## Beschreibung

Die Erfindung betrifft einen Schallabsorber gemäß dem Oberbegriff des Patentanspruches 1.

Es sind Schallabsorber aus Holz bekannt, welche für gewöhnlich Schredderholz, also beispielsweise mittels Hammermühlen zerkleinertes Holz umfassen. Das Schredderholz weist dabei normalerweise eine längliche und im Wesentlichen spitze Form auf und kann in seiner farblichen Erscheinung angepasst sein.

Des Weiteren ist bekannt, dass Schallabsorber in der Nähe von Straßen, beispielsweise zur Ausbildung einer Lärmschutzwand, oder an Tiefgarageneinfahrten zur Lärmreduktion befestigt werden können.

Nachteilig an derzeit bekannten Schallabsorbern aus Holz, insbesondere aus Schredderholz, ist, dass deren Fertigung aufgrund der fasrigen und ungleichmäßigen Form der Holzstücke aufwendig und mit Problemen verbunden ist. Diese Probleme resultieren aus dem fasrigen Charakter des Holzes, weshalb bei dessen Zerkleinerung für gewöhnlich ungleichmäßig große Holzstücke mit teils spitzen von den einzelnen Holzstücken abstehenden Holzteilen ausgebildet werden. Dadurch können die mit Bindemittel vermengten Holzstücke in einer Schalung auch nicht derart kompakt gepresst werden, wie wenn beispielsweise ein mineralisches Kantkorn anstatt der Holstücke verwendet wird. Dadurch ist beispielsweise die Fertigung derzeit bekannter Schallabsorber mittels Bodenfertiger oder mittels Schalungsboxen zeitaufwändig, da diese eine lange Trocknungszeit benötigen, bis sie formstabil ausgebildet und transportiert werden können.

Aufgabe der Erfindung ist es daher einen Schallabsorber der eingangs genannten Art anzugeben, mit welchem die genannten Nachteile vermieden werden können, und welcher schnell gefertigt werden kann.

Erfindungsgemäß wird dies durch die Merkmale des Patentanspruches 1 erreicht.

Dadurch ergibt sich der Vorteil, dass der Schallabsorber eine reduzierte Trocknungszeit bei dessen Fertigung aufweist. Durch die Verwendung der wenigstens 50 Gew.-Prozent ersten Holzstücke mit den erfindungsgemäßen Abmessungen kann der Schallabsorber bei dessen Fertigung mittels einer Schallabsorberform, nach Entfernen der Schallabsorberform deutlich schneller transportiert werden als derzeit bekannte Schallabsorber aus Holz, insbesondere aus Schredderholz. Weiters haben Untersuchungen gezeigt, dass aus wenigstens 50 Gew.-Prozent erste Holzstücke ausgebildete Schallabsorber ein hohes Schallabsorptionsvermögen bei einer gleichzeitige hohen Frost-Tausalzbeständigkeit sowie einer sehr geringen Abwitterung aufweisen. Weiters kommt es durch die Verwendung der erfindungsgemäßen ersten Holzstücke in Silos, wo das Holzhackgut gelagert, sowie auf Förderbändern, mit dessen Hilfe das Holzhackgut zu der Produktionsstätte der Schallabsorber gefördert wird zu geringeren Unterbrechungen, da ein Verkeilen der Holzstücke in den Silos und auf den Förderbändern reduziert wird.

Die Erfindung betrifft weiters ein Schallschutzelement gemäß dem Patentanspruch 11.

Die Erfindung betrifft weiters ein Verfahren gemäß dem Patentanspruch 12.

Die Erfindung hat daher weiters die Aufgabe ein Verfahren der eingangs genannten Art anzugeben, mit welchem die genannten Nachteile vermieden werden können, mit welchem der Schallabsorber schnell gefertigt werden kann.

Erfindungsgemäß wird dies durch die Merkmale des Patentanspruches 12 erreicht.

Die Vorteile des Verfahrens entsprechen den Vorteilen des oben genannten Schallabsorbers.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform eines Schallabsorbers in Schnittansicht,
Fig. 2 die in Fig. 1 gezeigte bevorzugte Ausführungsform des Schallabsorbers in Seitenansicht,
Fig. 3 die in Fig. 1 gezeigte bevorzugte Ausführungsform des Schallabsorbers in Draufsicht,
Fig. 4 eine bevorzugte Ausführungsform eines ersten Holzstücks in axonometrischer Ansicht.

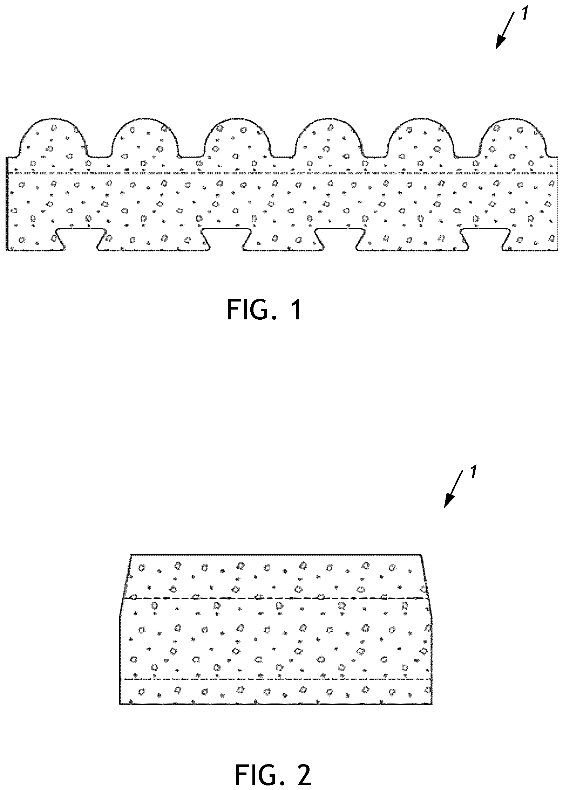

Die Fig. 1 bis 4 zeigen zumindest Teile einer bevorzugten Ausführungsform eines Schallabsorbers 1 umfassend ein mit Bindemittel gebundenes Holzhackgut, wobei das Holzhackgut in einem ungebundenen Zustand wenigstens 50 Gew.-Prozent erste Holzstücke 2 umfasst, wobei jedes erste Holzstück 2 eine maximale Längserstreckung 3 im Raum aufweist, welche maximale Längserstreckung 3 entlang einer Längsachse 4 verläuft, wobei die maximale Längserstreckung 3 des jeweiligen ersten Holzstücks 2 mindestens 1 Millimeter ist, wobei jedes erste Holzstück 2 eine maximale erste Quererstreckung 5 entlang einer zu der jeweiligen Längsachse 4 orthogonalen ersten Querachse 6 aufweist, wobei jedes erste Holzstück 2 eine maximale zweite Quererstreckung 7 entlang einer zweiten Querachse 8 aufweist, welche zweite Querachse 8 orthogonal zu der jeweiligen Längsachse 4 und orthogonal zu der jeweiligen ersten Querachse 6 ist, wobei die erste Quererstreckung 5 und die zweite Quererstreckung 7 des jeweiligen ersten Holzstücks 2 jeweils mindestens 30 Prozent von der Längserstreckung 3 des jeweiligen ersten Holzstücks 2 sind.

Es ist weiters ein Schallschutzelement zur Anordnung an einer Fahrbahn umfassend eine Mehrzahl an Schallabsorbern 1 vorgesehen, wobei die Schallabsorber 1 aneinander angrenzend angeordnet sind.

Weiters ist ein Verfahren zur Herstellung eines Schallabsorbers 1 umfassend ein Holzhackgut vorgesehen,
- wobei das Holzhackgut umfassend wenigstens 50 Gew.-Prozent erste Holzstücke 2 mit einem Bindemittel vermengt wird, wobei jedes erste Holzstück 2 eine maximale Längserstreckung 3 im Raum aufweist, welche maximale Längserstreckung 3 entlang einer Längsachse 4 verläuft, wobei die maximale Längserstreckung 3 des jeweiligen ersten Holzstücks 2 mindestens 1 Millimeter ist, wobei jedes erste Holzstück 2 eine maximale erste Quererstreckung 5 entlang einer zu der jeweiligen Längsachse 4 orthogonalen ersten Querachse 6 aufweist, wobei jedes erste Holzstück 3 eine maximale zweite Quererstreckung 7 entlang einer zweiten Querachse 8 aufweist, welche zweite Querachse 8 orthogonal zu der jeweiligen Längsachse 4 und orthogonal zu der jeweiligen ersten Querachse 6 ist, wobei die erste Quererstreckung 5 und die zweite Quererstreckung 7 des jeweiligen ersten Holzstücks 2 jeweils mindestens 30 Prozent von der Längserstreckung 3 des jeweiligen ersten Holzstücks 2 sind,
- wobei nachfolgend das mit dem Bindemittel vermengte Holzhackgut in eine Schallabsorberform eingebracht und in der Schallabsorberform gehärtet wird,
- wobei anschließend der Schallabsorber nach Erreichen eines formstabilen Zustands aus der Schallabsorberform entfernt wird.

Dadurch ergibt sich der Vorteil, dass der Schallabsorber 1eine reduzierte Trocknungszeit bei dessen Fertigung aufweist. Durch die Verwendung der wenigstens 50 Gew.-Prozent ersten Holzstücke 2 mit den erfindungsgenäßen Abmessungen kann der Schallabsorber 1 bei dessen Fertigung mittels einer Schallabsorberform, nach Entfernen der Schallabsorberform deutlich schneller transportiert werden als derzeit bekannte Schallabsorber aus Holz, insbesondere aus Schredderholz. Weiters haben Untersuchungen gezeigt, dass aus wenigstens 50 Gew.-Prozent erste Holzstücke ausgebildete Schallabsorber 1 ein hohes Schallabsorptionsvermögen bei einer gleichzeitige hohen Frost-Tausalzbeständigkeit sowie einer sehr geringen Abwitterung aufweisen. Weiters kommt es durch die Verwendung der erfindungsgemäßen ersten Holzstücke 2 in Silos, wo das Holzhackgut gelagert, sowie auf Förderbändern, mit dessen Hilfe das Holzhackgut zu der Produktionsstätte der Schallabsorber 1 gefördert wird zu geringeren Unterbrechungen, da ein Verkeilen der Holzstücke in den Silos und auf den Förderbändern reduziert wird.

Der Schallabsorber 1 ist eine Vorrichtung zum Vermindern von Schallenergie. Dabei soll der Schall von dem Schallabsorber 1 absorbiert, also mit einfachen Worten "aufgenommen" bzw. "aufgesaugt" werden.

Bevorzugt ist der Schallabsorber 1 an einer Wand befestigbar. Bevorzugt können mehrere an der Wand befestigte Schallabsorber 1 eine Schallschutzwand ausbilden. Die Schallschutzwand kann bevorzugt auch als Lärmschutzwand bezeichnet werden.

Der Schallabsorber 1 umfasst ein mit Bindemittel gebundenes Holzhackgut. Das Bindemittel ist dabei ein Stoff, mit welchem an Phasengrenzen anderer Stoffe Bindungen hergestellt werden können. Das Bindemittel wird dabei insbesondere in fließfähiger bzw. flüssiger Form mit dem Holzhackgut vermengt, sodass das Bindemittel mit den einzelnen Holzstücken des Holzhackguts in Kontakt gelangen, insbesondere vollständig benetzen, kann. Anschließend wird das mit dem Bindemittel vermengte Holzhackgut bevorzugt in eine Schallabsorberform eingebracht und in dieser gehärtet.

Bevorzugt kann die Schallabsorberform auch als Schalung bezeichnet werden. Bevorzugt ist die Schallabsorberform eine Negativform des Schallabsorbers 1.

Der ungebundene Zustand des Holzhackguts ist der Zustand des Holzhackguts vor einem Vermengen des Holzhackguts mit dem Bindemittel.

Bevorzugt kann das Bindemittel ein hydraulisches Bindemittel sein.

Besonders bevorzugt kann vorgesehen sein, dass das Bindemittel Zement umfasst. Dadurch kann auf einfache Weise das Holzhackgut gut gebunden werden.

Bevorzugt kann das Bindemittel Zement sein.

Bevorzugt wird das Holzhackgut aus entrindetem Rundholz, insbesondere einer Buche oder einer Fichte, mittels einer Hackmaschine ausgebildet. Dabei kann die Größe des Hackguts an der Hackmaschine insbesondere durch entsprechende Wahl der Maschineneinstellungen eingestellt werden.

Schredderholz ist dagegen ein Holz, welches mit stumpfen, zertrümmernden Werkzeugen zerkleinert wird.

Besonders bevorzugt kann vorgesehen sein, dass die maximale Längserstreckung 3 des jeweiligen ersten Holzstücks 2 mindestens 2 Millimeter, insbesondere mindestens 3 Millimeter, vorzugsweise mindestens 4 Millimeter, ist. Dadurch kann eine besonders kompakte Form des Hackguts verwendet werden, wodurch sich Vorteile bei der Ausbildung von Poren in dem Schallabsorber 1 ergeben, welche vorteilhaft für die Schallverminderung sind.

Besonders bevorzugt kann vorgesehen sein, dass die maximale Längserstreckung 3 des jeweiligen ersten Holzstücks 2 maximal 10 Millimeter, bevorzugt maximal 9 Millimeter, insbesondere maximal 8 Millimeter, besonders bevorzugt maximal 7 Millimeter, insbesondere maximal 4 Millimeter, ist. Dadurch kann eine besonders kompakte Form des Hackguts verwendet werden, wodurch sich Vorteile bei der Ausbildung von Poren in dem Schallabsorber 1 ergeben, welche vorteilhaft für die Schallverminderung sind.

Besonders bevorzugt kann vorgesehen sein, dass die erste Quererstreckung 5 und die zweite Quererstreckung 7 des jeweiligen ersten Holzstücks 2 jeweils mindestens 50 Prozent, besonders bevorzugt mindestens 70 Prozent, insbesondere mindestens 90 Prozent, von der Längserstreckung 3 des jeweiligen ersten Holzstücks 2 sind. Dadurch kann die Nachbearbeitung des Schallabsorber 1 deutlich verbessert werden. Dadurch kann eine Seitenfläche des Schallabsorbers 1 deutlich ebener gefertigt werden als bei derzeit bekannten Schallabsorbern aus Holz, wodurch zwei aneinander angrenzende Schallabsorber 1 besonders planparallel zueinander angeordnet werden können. Weiters kann dadurch einem Verkeilen der ersten Holzstücke 2 bzw. dem Holzhackgut in einem Silo oder bei dem Transport auf einem Förderband bei der Fertigung des Schallabsorbers 1 besonders effektiv entgegengewirkt werden.

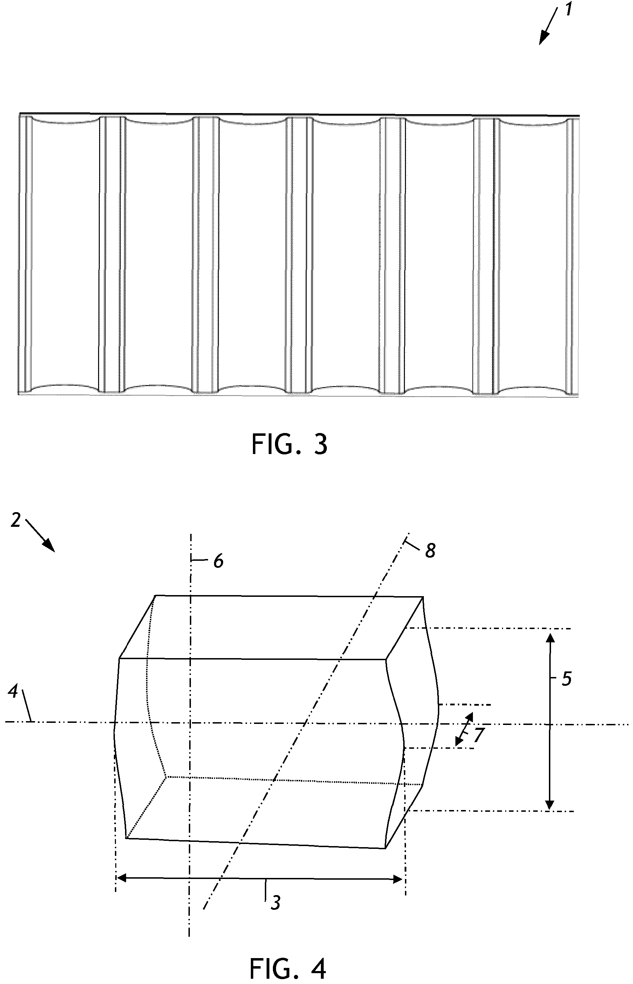

Jedes erste Holzstück 2 weist eine maximale Erstreckung im Raum auf, welche die Längserstreckung 3 ist. Diese maximale Erstreckung des jeweiligen ersten Holzstücks 2 ist dabei zwischen zwei Punkten an dem jeweiligen ersten Holzstück 2 ausgebildet, welche zwei Punkte an den jeweiligen Enden des jeweiligen ersten Holzstücks 2 angeordnet sind. Die Längsachse 4 des jeweiligen ersten Holzstücks 2 verläuft dabei durch diese beiden Punkte bzw. Enden des jeweiligen ersten Holzstücks 2. In Richtung der Längsachse 4 weist das jeweilige erste Holzstück 2 daher seine größte Ausdehnung auf. Aus diesem Grund weist jedes erste Holzstück 2 auch nur eine maximale Erstreckung im Raum auf, welche die maximale Längserstreckung 3 ist. In Fig. 4 ist ein erstes Holzstück 2 beispielhaft in axonometrischer Ansicht gezeigt. Dabei sind die maximale Längserstreckung 3 im Raum sowie die Längsachse 4 gezeigt.

Weiters ist in Fig. 4 auch die erste Querachse 6 gezeigt, entlang welcher die maximale erste Quererstreckung 5 des jeweiligen ersten Holzstücks 2 verläuft. Weiters zeigt Fig. 4 auch die zweite Querachse 8, entlang welcher die maximale zweite Quererstreckung 7 des jeweiligen ersten Holzstücks 2 verläuft. Die Form des in Fig. 4 gezeigten Holzstücks 2 ist dabei lediglich beispielhaft gezeigt.

Besonders bevorzugt kann vorgesehen sein, dass die ersten Holzstücke 2 im Wesentlichen quaderförmig ausgebildet sind. Dadurch kann der Schallabsorber 1 besonders einfach gefertigt sowie nachbearbeitet werden. Dadurch ergibt sich eine besonders schnelle Ausbildung der Formbeständigkeit, sowie ergeben sich Vorteile bei der Witterungsbeständigkeit des Schallabsorbers 1.

Bevorzugt können die ersten Holzstücke 2 im Wesentlichen kubisch ausgebildet sein. Kubisch kann insbesondere auch als würfelförmig bezeichnet werden. Dadurch, dass das Holzhackgut für gewöhnlich mit einer Hackmaschine hergestellt wird, sind dabei mit im Wesentlichen kubisch ausgebildete erste Holzstücke 2 jedoch keine perfekt ausgebildeten Würfel zu verstehen, sodass an den Seitenflächen der ersten Holzstücke 2 Ausnehmungen vorhanden sein können.

Bevorzugt kann die maximale erste Quererstreckung 5 und/oder die maximale zweite Quererstreckung 7 im Wesentlichen der maximalen Längserstreckung 3 im Raum des jeweiligen ersten Holzstücks 2 entsprechen.

Bevorzugt kann sich der Koordinatenursprung der Längsachse 4, der ersten Querachse 6 und der zweiten Querachse 8 unterscheiden. Dies ist beispielhaft in Fig. 4 gezeigt.

Alternativ kann die Längsachse 4, die erste Querachse 6 und die zweite Querachse 8 des jeweiligen ersten Holzstücks 2 denselben Koordinatenursprung aufweisen.

Zur Messung der Abmessungen eines ungebundenen ersten Holzstücks 2 wird dieses bevorzugt zuerst in Richtung der längsten Erstreckung, also der maximalen Längserstreckung 3, gemessen. In dieser Richtung liegt auch die Längsachse 4 des zu messenden ersten Holzstücks 2. Nachfolgend wird die maximale erste Quererstreckung 5 entlang der zu der Längsachse 4 orthogonalen ersten Querachse 6 an dem ersten Holzstück 2 bestimmt. Anschließend wird die maximale zweite Quererstreckung 7 entlang der zweiten Querachse 8 bestimmt. Die zweite Querachse 8 muss dabei nicht denselben Koordinatenursprung wie die Längsachse 4 und die erste Querachse 6 aufweisen, sondern lediglich orthogonal zu der Längsachse 4 und orthogonal zu der ersten Querachse 6 sein. Dies ist beispielhaft in Fig. 4 ersichtlich.

Besonders bevorzugt kann vorgesehen sein, dass das Holzhackgut in einem ungebundenen Zustand wenigstens 55 Gew.-Prozent, besonders bevorzugt wenigstens 60 Gew.-Prozent, insbesondere wenigstens 70 Gew.-Prozent, erste Holzstücke 2 umfasst. Dadurch weist der Schallabsorber 1 ein besonders hohes Schallabsorptionsvermögen sowie eine hohe Widerstandsfähigkeit gegenüber den Schallabsorber 1 anfahrenden Kraftfahrzeugen auf.

Besonders bevorzugt kann vorgesehen sein, dass der Schallabsorber 1 ein poröser Absorber ist. Dadurch ergibt sich der Vorteil, dass eine besonders gute Schallverminderung mit dem Schallabsorber 1 erreicht werden kann.

Ein poröser Absorber weist dabei ein dichtes Netzwerk von miteinander größtenteils verbundenen Hohlräumen bzw. Poren auf, welche bis an die Oberfläche des porösen Absorbers reichen. Die Struktur des als porösen Absorbers ausgebildeten Schallabsorber 1 ist demnach mit einem Schwamm und nicht mit einem Schaum, welcher abgeschlossene Hohlräume aufweist, vergleichbar. Eine Schallwelle, welche auf die Oberfläche eines derartigen porösen Absorbers trifft, wird nur zu einem geringen Teil reflektiert, wobei der größere Teil in das Innere des porösen Absorbers eindringt und der Schall das in den Poren und/oder Hohlräumen enthaltene Gas in Schwingungen versetzt. Ein Teil dieser Schallenergie wird durch die Reibung zwischen dem, in den Poren bzw. Hohlräumen schwingenden Gas und dem festen Material des porösen Absorbers in Wärmeenergie umgewandelt und somit dissipiert. Je größer dabei das Volumen des porösen Absorbers ist, desto größer ist auch der Teil der dissipierten Schallintensität. Das feste Material des porösen Absorbers ist dabei das mit dem Bindemittel gebundene Holzhackgut.

Besonders bevorzugt kann vorgesehen sein, dass die ersten Holzstücke 2 eine unstetige Sieblinie aufweisen. Dadurch kann erreicht werden, dass ein geringer Anteil an sehr kleinen sowie flachen und langen Holzstücke in dem Holzhackgut, beispielsweise ein geringer Anteil von Sägemehl und langen spitzen Holzstücken, vorhanden ist. Dadurch kann die erfindungsgemäße Partikelgrößenverteilung des Holzhackguts einfach ausgebildet werden.

Eine unstetige Sieblinie bezeichnet dabei den Umstand, dass bestimmte vorgebbare Körnungen nicht vorhanden sind. Dadurch kann ebenfalls eine Vorgabe der Art, Anzahl und Größe der Poren in dem Schallabsorber 1 erzielt werden. Die Poren werden dabei bevorzugt durch freie Zwischenräume zwischen einzelner Holzstücke, insbesondere Partikel des Holzhackguts, gebildet.

Besonders bevorzugt kann vorgesehen sein, dass der Schallabsorber 1 Polymerfasern zur Erhöhung der Festigkeit umfasst, welche Polymerfasern in dem gebundenen Holzhackgut angeordnet sind. Dadurch kann die Festigkeit des Schallabsorbers 1 einfach und effektiv bei der Fertigung erhöht werden. Dadurch kann eine hohe Formbeständigkeit bei einer impulsartigen Einwirkung, beispielsweise bei einem gegen den Schallabsorber 1 anprallenden Fahrzeug, erreicht werden.

Bevorzugt kann die Polymerfaser eine Polypropylenfaser oder eine Aramidfaser oder eine Polyamidfaser sein.

In den Fig. 1 bis 3 ist beispielhaft eine bevorzugte Ausführungsform des Schallabsorbers 1 gezeigt, wobei Fig. 1 eine Schnittansicht, Fig. 2 eine Seitenansicht und Fig. 3 eine Draufsicht zeigt.

Bevorzugt kann das Schallschutzelement auch als Schallschutzbauteil bezeichnet werden. Das Schallschutzelement ist in den Fig nicht gezeigt.

Bevorzugt kann das Schallschutzelement an einer Fahrbahn angeordnet sein.

Bevorzugt grenzen bei dem Schallschutzelement die Schallabsorber 1 mit den Seitenflächen aneinander an.

Bevorzugt kann das Schallschutzelement zur Ausbildung einer Schallschutzwand ausgebildet sein. Bevorzugt kann das Schallschutzelement zumindest teilweise eine Schallschutzwand ausbilden. Die Schallschutzwand kann bevorzugt auch als Lärmschutzwand bezeichnet werden. Bevorzugt ist die Schallschutzwand zur Reduktion von Fahrzeuglärm ausgebildet.

Bevorzugt weisen die ersten Holzstücke 2 eine Partikelgrößenverteilung zwischen mindestens 1 Millimeter und maximal 10 Millimeter, insbesondere zwischen mindestens 1 Millimeter und maximal 4 Millimeter, vorzugsweise zwischen mindestens 2 Millimeter und maximal 4 Millimeter, auf.

Bevorzugt können die Holzstücke in dem Holzhackgut, welche eine andere Partikelgrößenverteilung als zwischen mindestens 1 Millimeter und maximal 10 Millimeter, insbesondere zwischen mindestens 1 Millimeter und maximal 4 Millimeter, vorzugsweise zwischen mindestens 2 Millimeter und maximal 4 Millimeter, aufweisen auch als zweite Holzstücke bezeichnet werden.

Bevorzugt können die ersten Holzstücke 2 größer als ein erster Vorgabekörper und kleiner als ein zweiter Vorgabekörper sein.

Bevorzugt kann der erste und/oder der zweite Vorgabekörper quaderförmig ausgebildet sein.

Bevorzugt kann der erste Vorgabekörper eine erste Vorgabelänge, eine erste Vorgabebreite und eine erste Vorgabehöhe aufweisen.

Bevorzugt ist die erste Vorgabelänge des ersten Vorgabekörpers 1 Millimeter, besonders bevorzugt 2 Millimeter, insbesondere 3 Millimeter, lang.

Bevorzugt ist die erste Vorgabebreite und die erste Vorgabehöhe jeweils 30 Prozent, vorzugsweise 50 Prozent, besonders bevorzugt 70 Prozent, insbesondere 90 Prozent, von der ersten Vorgabelänge des ersten Vorgabekörpers.

Besonders bevorzugt können die erste Vorgabebreite und die erste Vorgabehöhe des ersten Vorgabekörpers jeweils der ersten Vorgabelänge des ersten Vorgabekörpers entsprechen.

Bevorzugt kann der zweite Vorgabekörper eine zweite Vorgabelänge, eine zweite Vorgabebreite und eine zweite Vorgabehöhe aufweisen.

Bevorzugt ist die zweite Vorgabelänge 10 Millimeter, besonders bevorzugt 7 Millimeter, insbesondere 4 Millimeter, lang.

Bevorzugt ist die zweite Vorgabebreite und die zweite Vorgabehöhe jeweils 30 Prozent, vorzugsweise 50 Prozent, besonders bevorzugt 70 Prozent, insbesondere 90 Prozent, von der zweiten Vorgabelänge des zweiten Vorgabekörpers.

Besonders bevorzugt kann die zweite Vorgabebreite und die zweite Vorgabehöhe des zweiten Vorgabekörpers jeweils der zweiten Vorgabelänge des zweiten Vorgabekörpers entsprechen.

Bevorzugt steht jedes erste Holzstück 2 über alle Seiten des ersten Vorgabekörpers hinaus.

Bevorzugt kann jedes erste Holzstück 2 in den zweiten Vorgabekörper angeordnet sein bzw. werden.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Schallabsorber (1) umfassend ein mit Bindemittel gebundenes Holzhackgut, wobei das Holzhackgut in einem ungebundenen Zustand wenigstens 50 Gew.-Prozent erste Holzstücke (2) umfasst, wobei jedes erste Holzstück (2) eine maximale Längserstreckung (3) im Raum aufweist, welche maximale Längserstreckung entlang einer Längsachse (4) verläuft, wobei die maximale Längserstreckung (3) des jeweiligen ersten Holzstücks (2) mindestens 1 Millimeter ist, wobei jedes erste Holzstück (2) eine maximale erste Quererstreckung (5) entlang einer zu der jeweiligen Längsachse (4) orthogonalen ersten Querachse (6) aufweist, wobei jedes erste Holzstück (2) eine maximale zweite Quererstreckung (7) entlang einer zweiten Querachse (8) aufweist, welche zweite Querachse (8) orthogonal zu der jeweiligen Längsachse (4) und orthogonal zu der jeweiligen ersten Querachse (6) ist, **dadurch gekennzeichnet, dass** die erste Quererstreckung (5) und die zweite Quererstreckung (7) des jeweiligen ersten Holzstücks (2) jeweils mindestens 30 Prozent von der Längserstreckung (3) des jeweiligen ersten Holzstücks (2) sind.

2. Schallabsorber (1) nach Anspruch 1, **dadurch gekennzeichnet, dass** die maximale Längserstreckung (3) des jeweiligen ersten Holzstücks (2) mindestens 2 Millimeter, insbesondere mindestens 3 Millimeter, ist.

3. Schallabsorber (1) nach Anspruch 1 oder 2, **dadurch gekennzeichnet, dass** die maximale Längserstreckung (3) des jeweiligen ersten Holzstücks (2) maximal 10 Millimeter, besonders bevorzugt maximal 7 Millimeter, insbesondere maximal 4 Millimeter, ist.

4. Schallabsorber (1) nach einem der Ansprüche 1 bis 3, **dadurch gekennzeichnet, dass** die erste Quererstreckung (5) und die zweite Quererstreckung (7) des jeweiligen ersten Holzstücks (2) jeweils mindestens 50 Prozent, besonders bevorzugt mindestens 70 Prozent, insbesondere mindestens 90 Prozent, von der Längserstreckung (3) des jeweiligen ersten Holzstücks (2) sind.

5. Schallabsorber (1) nach einem der Ansprüche 1 bis 4, **dadurch gekennzeichnet, dass** die ersten Holzstücke (2) im Wesentlichen quaderförmig ausgebildet sind.

6. Schallabsorber (1) nach einem der Ansprüche 1 bis 5, **dadurch gekennzeichnet, dass** das Holzhackgut in einem ungebundenen Zustand wenigstens 55 Gew.-Prozent, besonders bevorzugt wenigstens 60 Gew.-Prozent, insbesondere wenigstens 70 Gew.-Prozent, erste Holzstücke (2) umfasst.

7. Schallabsorber (1) nach einem der Ansprüche 1 bis 6, **dadurch gekennzeichnet, dass** der Schallabsorber (1) ein poröser Absorber ist.

8. Schallabsorber (1) nach Anspruch 7, **dadurch gekennzeichnet, dass** die ersten Holzstücke (2) eine unstetige Sieblinie aufweisen.

9. Schallabsorber (1) nach einem der Ansprüche 1 bis 8, **dadurch gekennzeichnet, dass** das Bindemittel Zement umfasst.

10. Schallabsorber (1) nach einem der Ansprüche 1 bis 9, **dadurch gekennzeichnet, dass** der Schallabsorber (1) Polymerfasern zur Erhöhung der Festigkeit umfasst, welche Polymerfasern in dem gebundenen Holzhackgut angeordnet sind.

11. Schallschutzelement zur Anordnung an einer Fahrbahn umfassend eine Mehrzahl an Schallabsorbern (1) nach einem der Ansprüche 1 bis 10, **dadurch gekennzeichnet, dass** die Schallabsorber (1) aneinander angrenzend angeordnet sind.

12. Verfahren zur Herstellung eines Schallabsorbers (1) umfassend ein Holzhackgut,
- wobei das Holzhackgut umfassend wenigstens 50 Gew.-Prozent erste Holzstücke (2) mit einem Bindemittel vermengt wird, wobei jedes erste Holzstück (2) eine maximale Längserstreckung (3) im Raum aufweist, welche maximale Längserstreckung (3) entlang einer Längsachse (4) verläuft, wobei die maximale Längserstreckung (3) des jeweiligen ersten Holzstücks (2) mindestens 1 Millimeter ist, wobei jedes erste Holzstück (2) eine maximale erste Quererstreckung (5) entlang einer zu der jeweiligen Längsachse (4) orthogonalen ersten Querachse (6) aufweist, wobei jedes erste Holzstück (2) eine maximale zweite Quererstreckung (8) entlang einer zweiten Querachse (8) aufweist, welche zweite Querachse (8) orthogonal zu der jeweiligen Längsachse (4) und orthogonal zu der jeweiligen ersten Querachse (6) ist, wobei die erste Quererstreckung (5) und die zweite Quererstreckung (7) des jeweiligen ersten Holzstücks (2) jeweils mindestens 30 Prozent von der Längserstreckung (3) des jeweiligen ersten Holzstücks (2) sind,
- wobei nachfolgend das mit dem Bindemittel vermengte Holzhackgut in eine Schallabsorberform eingebracht und in der Schallabsorberform gehärtet wird,
- wobei anschließend der Schallabsorber (1) nach Erreichen eines formstabilen Zustands aus der Schallabsorberform entfernt wird.
